# EUROPEAN PATENT APPLICATION

(11) **EP 3 503 596 A1**
(43) Date of publication of application: **26.06.2019**
(21) Application number: 17208738.9
(22) Date of filing: 20.12.2017
(51) Int. Cl.: H04W 4/021, H04W 12/08

(54) **VERIFYING THE LOCATION OF A USER**

(71) Applicant: Nagravision S.A., 1033 Cheseaux-sur-Lausanne (CH)
(72) Inventor: WENDLING, Bertrand, 01220 Divonne-les-Bains (FR)
(74) Representative: Ipside

(57) **Abstract**

In order to validate the location of a user, it is proposed a method to validate a location of a user using an Internet service of a service provider, said user having a mobile device registered with a mobile service provider, said method comprising :
- requesting by the Internet service provider, the location of the user,
- receiving, via the Internet, from the user, an indicated location of the user,
- requesting the user to send a message to the Internet service provider with the mobile device, said message comprising data identifying the user,
- receiving the message by the Internet service provider and determining the mobile service provider of the mobile device,
- requesting, by the Internet service provider, the mobile service provider to confirm the indicated location for said mobile device using the data of the message,
- determining, by the mobile service provider the actual location of the mobile device,
- comparing the actual location with the indicated location,
- transmitting the result of the comparison to the Internet service provider, and
- validating by the Internet service provider the location if the comparison is positive.

## Description

### Background

The facility to access an Internet service provider from anywhere in the world is greatly appreciated and enables to share knowledge. However, in some instances, the service provider is willing to know the origin or the location of the request for a service. The Internet service provider in some case is willing to limit the access to some services to users located in a certain area. This could be the case for copyright issues, when the copyright owner has granted the right to transmit an audio or video content to users located in a particular country. The standard procedure is to fetch the IP address of the requestor and to check the location of the requestor. The IP address does not directly contain the country of origin such as the international prefix for the phone, but services are available to search the "whois" records for an IP you're interested in, and will give you the country.

The basic protocol for sending data over the Internet network and many other computer networks is the Internet Protocol (IP). The protocol specifies that each IP packet should have a header which contains, amongst other things, the IP address of the sender of the packet. The source IP address is normally the address that the packet was sent from, but the sender's address in the header can be altered, so that to the recipient it appears that the packet came from another source. The protocol requires the receiving party to send back a response to the source address, so that spoofing is mainly used when the sender uses a proxy that is located in another location than the one of the sender.

Using a VPN is another method to hide an IP address. VPN stands for virtual private network and it is possible to connect a computer or a device to someone else's network, then browse the web through their network. Whatever activity the computer is doing looks like it's coming from them (i.e. the network), not from the computer.

In other words, while connecting to a VPN, the computer is masking its IP address with one of the IP addresses in that network.

### Brief description

Today, most of the users actively using Internet have a mobile device. The mobile device is connected with the nearest mobile communication tower in communication with the main mobile service provider, for which the mobile device is registered. This main mobile service provider knows where the mobile device is located in order to transmit any message or communication. In case that the mobile device is located in another country, the roaming procedure is activated and the mobile device is connected with a local mobile service provider. This local mobile provider collects the identification data of the mobile device and transmits the current status of the mobile device to the main mobile service provider. The local mobile service provider is active in a country and the main mobile service provider receives the details of the local mobile service provider including the country where it is located.

As a consequence, a method is proposed to validate a location of a user using an Internet service of a service provider, said user having a mobile device registered with a mobile service provider, said method comprising :
- requesting by the Internet service provider, the location of the user,
- receiving, via the Internet, from the user, an indicated location of the user,
- requesting the user to send a message to the Internet service provider with the mobile device, said message comprising data identifying the user,
- receiving the message by the Internet service provider and determining the mobile service provider of the mobile device,
- requesting, by the Internet service provider, the mobile service provider to confirm the indicated location for said mobile device using the data of the message,
- determining, by the mobile service provider the actual location of the mobile device,
- comparing the actual location with the indicated location,
- transmitting the result of the comparison to the Internet service provider, and
- validating by the Internet service provider the location if the comparison is positive.

### Brief description of the figures

The present case will be better understood thanks to the attached figures in which :
- figure 1 illustrates the system comprising the user connected with the Internet service provider with a computer and with a mobile service provider with a mobile device.
- figure 2 illustrates two ways to identify the user while a message is received,
- figure 3 illustrates the roaming case of the figure 1.

### Detailed description

The main feature is to use the mobile device in the verification method. The mobile device MD is connected to the nearest mobile service provider tower MSP-T in order to connect to the mobile network. The tower MSP-T is part of the network of the mobile service provider MSP. The mobile device is registered in one mobile service provider at a time. The main mobile service provider is the one with which the mobile device is initially registered. The main mobile service provider is in charge of the billing of the mobile device activities and keeps track of the location within its network of the mobile device. This way, in case that a communication with the mobile device is requested by a third party, the main mobile service provider can establish a connection with the mobile device through the mobile service provider tower MSP-T. So at any time, the mobile service provider knows where the mobile device is located, at least in which area corresponding to the nearest tower.

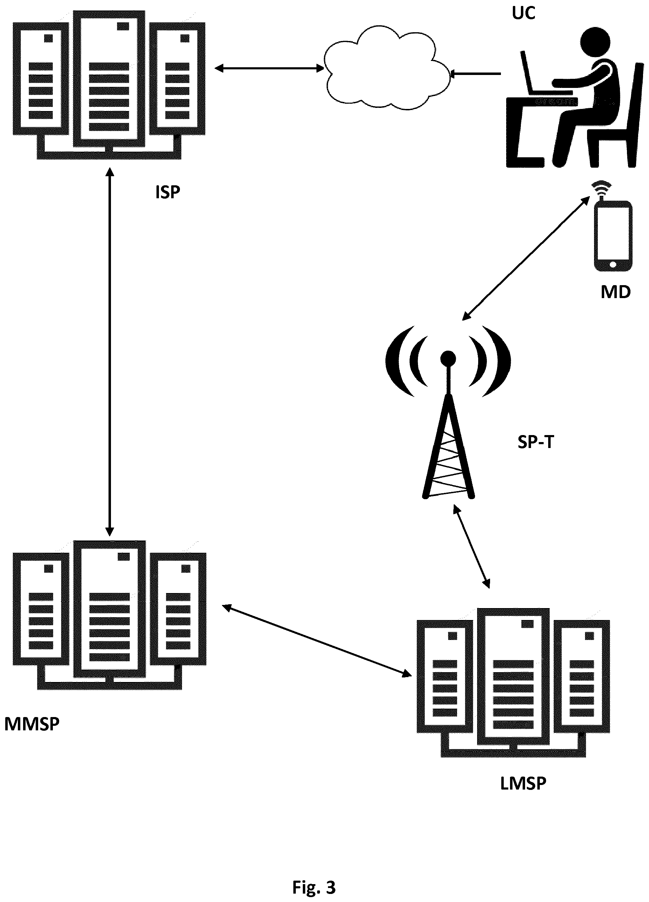

In the case illustrated at the figure 3, the mobile device MD is connected with a tower belonging to a local mobile service provider LMSP. This is not the mobile service provider for which the mobile device MD is initially registered. The local mobile service provider LMSP is in connection with the main mobile service provider MMSP via a communication network. The protocol used is the one in charge of the roaming of our mobile communications. This way, the main mobile service provider MMSP receives the information of the location of the mobile device MD from the local mobile service provider.

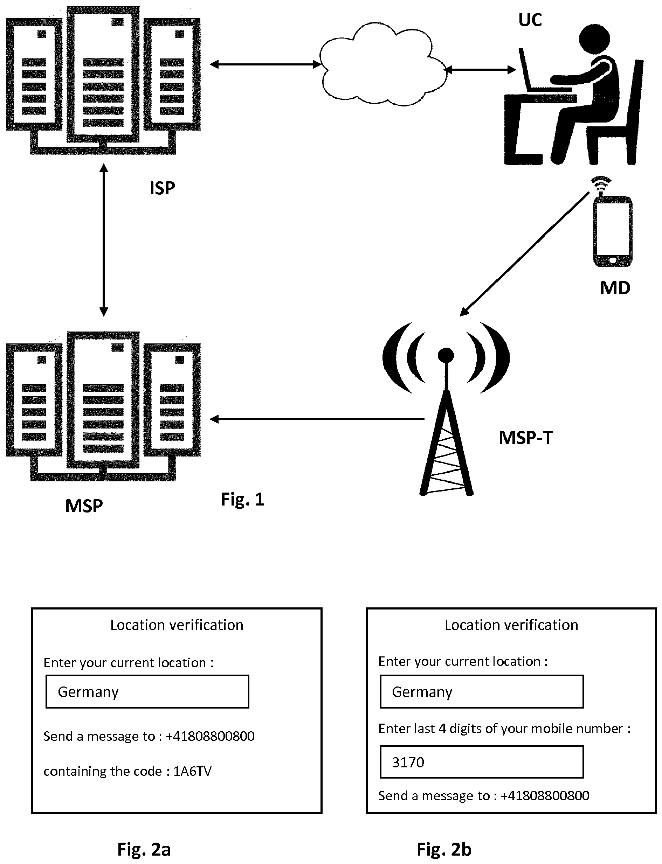

As illustrated in figure 1, the user is connected to an Internet service provider ISP via a user's computer UC. The user's computer can by any type of device allowing access to Internet such as desktop computer, portable computer, tablet, smartphone. In one particular case, the user's computer UC can be the mobile device MD.

During a session of the user with the Internet service provider ISP, the latter request the verification of the location of the user's computer UC. For that purpose, the Internet service provider ISP request the user's computer UC to send a message to a particular number belonging to the Internet service provider ISP. The message sent by the user via its mobile device MD should be identified as belonging to the user currently accessing the Internet service provider ISP. For that purpose, as illustrated by the figure 2a and 2b, two solutions are proposed. The first one is based on a one-time code displayed on the user's computer (see figure 2a). The user copies the one-time code into the message and sends the message to the number displayed on the user's computer UC. Once the message is received by the Internet service provider ISP, the one-time code is extracted from the message and compared with the one displayed on the user's computer UC.

In the second solution, the user enters all or part of its mobile device number in a window displayed by the Internet service provider. When the Internet service provider receives a message, it checks the mobile number of the sender and compares it with the one received via the Internet session.

The Internet service provider could receive a plurality of messages within a short time frame. This is why the Internet service provider should determine which user (or which active session) it refers to.

Using the one-time code or the mobile number, the Internet service provider can find a match with the current session of the user and one of the received messages. For example, for a first user having a first user session, the one-time code was 1A6TV and for a second user having a second user session, the one-time code was 2FZ10.

Extracting the one-time code from a received message allows the Internet service provider to determine which user session it refers to.

In the same manner, a first message having a first mobile number and a second message having a second mobile number are received by the Internet service provider. Using the mobile number (or part of it) entered by the user during the user session allows the Internet service provider to allocate a received message with a user session.

Other methods to reconcile a received message with a current session can be used. For example the user can introduce its username in the message, the one used during the session with the Internet service provider.

When the message is received by the Internet service provider ISP, the mobile device number is known to the ISP. The mobile device number comprises a country code (e.g. 49 for Germany) indicating the main mobile service provider. This country code cannot be used to verify the location since the user can move to another country or the user can have acquired a SIM card from another mobile service provider located in a different country to which the user is currently located.

**Table 1**

| **Byte(s)** | **Description** | **format** |
|---|---|---|
| 07 | Length of the SMC information | hex-byte |
| 91 | Type of SMC address | hex-byte |
| 13 26 04 00 00 F0 | SMSC number | decimal semi-bytes b |
| 04 | First byte of this SMS-DELIVER message. | hex-byte |
| 0B | Lenght of the sender address | hex-bytes |
| 91 | Type of address of the sender number | hex-byte |
| 13 46 61 00 89 F6 | Sender number | decimal semi-bytes |
| 00 | Protocol identifier | hex-bytes |
| 00 | Data encoding scheme | hex-bytes |
| 20 80 62 91 73 14 08 | Time stamp | decimal semi-bytes |
| 0C | Length of User data (SMS message) | hex-bytes |
| C8 F7 1D 14 96 97 41 F9 77 FD 07 | User data, i.e. the message | 8-bit bytes representing 7-bit data |

The table 1 illustrates the full content of a SMS message. The first step is to find the mobile service provider related to the sender of the message. In a similar fashion to IP address, it is possible to access services to obtain this information. The services can be an internal function hosted into the Internet service provider or an external service proposing, while providing the mobile number, to respond with the mobile service provider identification.

Once the mobile service provider has been identified, the Internet service provider connects via a dedicated interface to the identified mobile service provider. A copy of the message is presented to the mobile service provider as well as the intended location indicated by the user during the current session with the Internet service provider. In the case illustrated at the figures 2a and 2b, the user has indicated "Germany" as its current location. So the Internet service provider requests the verification of the location and transmits the location "Germany" to the mobile service provider. In some instances, when only one country is authorized by the Internet service provider, it is not necessary to indicate the location by the user but simply confirm that he/she is currently in Germany (being the only country authorized by the Internet service provider). We therefore consider that obtaining an indicated location from the user is a simple confirmation of the question "are you presently in Germany ? "

After having received the request by the Internet service provider, the mobile service provider extracts the mobile device number from the message and checks the current location related to this mobile device. The mobile service provider compares the current location with the one received by the Internet service provider. In case the location is the same, the mobile service provider simply responds by a "Yes". In the other case, the mobile service provider simply responds by a "No".

According to one embodiment, before accepting the request to compare the indication location with the current location of the mobile device, the mobile service provider checks if a message has been duly sent to the Internet service provider from the identified mobile device. Each message sent to a user of the network administrated by the mobile service provider is stored in a memory of the mobile service provider, at least for a given period. The data of the SMS message transmitted by the Internet service provider allows the mobile service provider to retrieve the original message stored in its memory. If the same message is found, the request is accepted and the comparison is carried out. In the negative event, the request is denied.

An additional verification can optionally be performed by the mobile service provider based on the time and date of the message. Verification is accepted if the message is "fresh", for example not older than a predefined duration, e.g. 30 minutes. The message data comprises a time stamp used for that purpose, which represent the time at which the message was sent. The mobile service provider can also limit the number of verifications per message to 1. For that purpose, the mobile service provider stores the fact that a verification has been carried out for this message. In case that an (or the same) Internet service provider requests a verification for the same message, the request will be denied.

When the Internet service provider receives the information from the mobile service provider, it can then decide, depending of the result of the verification, to grant or deny access to the service requested by the user.

## Claims

1. A method to validate a location of a user using an Internet service of a service provider, said user having a mobile device registered with a mobile service provider, said method comprising:
- requesting by the Internet service provider, the location of the user,
- receiving, via the Internet, from the user, an indicated location of the user,
- requesting the user to send a message to the Internet service provider with the mobile device through the mobile service provider, said message comprising data identifying the user,
- receiving the message by the Internet service provider and determining the mobile service provider of the mobile device,
- requesting, by the Internet service provider, the mobile service provider to confirm the indicated location for said mobile device using the data of the message,
- determining, by the mobile service provider the actual location of the mobile device,
- comparing the actual location with the indicated location,
- transmitting the result of the comparison to the Internet service provider, and
- validating by the Internet service provider the location if the comparison is positive.

2. The method of claim 1, wherein the identification of the user by the message data comprises:
- generating and displaying by the Internet service provider a one-time code,
- entering the one-time code into the message by the user,
- extracting from the received message data, the one -time code and comparing the received one-time code with the one generated and displayed in order to identify the user.

3. The method of claim 1, wherein the identification of the user by the message data comprises:
- requesting the user, by the Internet service provider, to transmit all or part of an indicated mobile device number via the Internet service,
and while receiving the message data, comparing the indicated mobile device number with the mobile device number extracted from the message data in order to identify the user.

4. The method of any of the claims 1 to 3, wherein the mobile service provider, before accepting the request from the Internet service provider, verifies that the user has sent said message to the Internet service provider.

5. The method of any of the claims 1 to 4, wherein the message comprises a time stamp, the mobile service provider, before accepting the request from the Internet service provider, uses the time stamp of the message to verify that the message is not older than a predefined duration.

6. The method of any of the claims 1 to 5, wherein the mobile service provider, before accepting the request from the Internet service provider, verifies that the message is used for the first time for a verification.

7. The method of any of the claims 1 to 6, wherein the message is a SMS message.

8. A Internet service provider (ISP) providing services subject to a location verification to a user having a user computer (UC) and a mobile device (MD), said Internet service provider (ISP) being configured to :
- establish an Internet session with the user computer (UC),
- request the user to send a message through a mobile service provider (MSP), said message comprising data identifying the Internet session,
- receive the message from the mobile service provider (MSP) and identify the Internet session,
- present the message to the mobile service provider (MSP) together with an indicated location of the mobile device (MD),
- receive a response from the mobile service provider (MSP) to confirm or deny the indicated location for the mobile device (MD),
- allow or deny the access to the service for the user's computer (UC) in accordance with the received response.
